# EUROPÄISCHE PATENTANMELDUNG

(11) **EP 2 073 083 A1**
(43) Veröffentlichungstag der Anmeldung: **24.06.2009**
(21) Anmeldenummer: 08018274.4
(22) Anmeldetag: 18.10.2008
(51) Int. Cl.: G05B 19/05, G06F 3/048, G06F 9/44, G06F 11/36

(54) **Verfahren zum Programmieren und/oder Diagnostizieren einer speicherprogrammierbaren Steuerung**

(30) Priorität: 22.12.2007 DE 102007062453
(71) Anmelder: Robert Bosch GmbH, 70469 Stuttgart (DE)
(72) Erfinder: Schultze, Stephan, 97816 Lohr am Main (DE); Paul, Wolfgang, 97816 Lohr am Main (DE)
(74) Vertreter: Thürer, Andreas

(57) **Zusammenfassung**

Die Erfindung betrifft ein Verfahren zum Programmieren und/oder Diagnostizieren einer speicherprogrammierbaren Steuerung mit wenigstens einem speicherprogrammierbaren Funktionsbaustein, wobei zum Programmieren ein vorgegebenes Programmiersystem verwendet wird, und im Rahmen dieses Programmiersystems Variabeln vorgegeben werden und zum Programmieren Informationsaustauschabläufe verwendet werden: Erfindungsgemäß werden Ergebnisse der Programmierung oder Diagnose während wenigstens eines Programmiermodus über eine Anzeigeeinrichtung ausgegeben und die Informationsaustauschabläufe sind dem Funktionsbaustein zugeordnet und stehen als vordefinierte Informationsaustauschabläufe dieses speicherprogrammierbaren Funktionsbausteins zur Verfügung.

## Beschreibung

Die vorliegende Erfindung bezieht sich auf ein Verfahren zum Programmieren und zur Diagnose einer speicherprogrammierbaren Steuerung (SPS). Derartige Steuerungen werden in der Automatisierung verwendet, um in Maschinen und Anlagen Verfahrensabläufe zu steuern bzw. um einzelne Antriebe dieser Anlagen anzusteuern. Genauer kann die vorliegende Erfindung im Rahmen des Engineerings von Automationsgeräten bzw. - verbünden, die eine speicherprogrammierbare Steuerung beinhalten, verwendet werden. Beim Programmieren derartiger Steuerungen ist es bekannt, einen bestimmten Fehlersuchmodus (Debugmodus) zur Verfügung zu stellen, bei dem Ein- und Ausgänge mittels einer sogenannten Online-Statusanzeige als Zahlenwerte jedoch ohne Bezug zur logischen Funktion der Funktionsbausteine dargestellt werden. Damit ist hier nur eine Darstellung von Zahlenwerten möglich, jedoch keine aufbereitete Darstellung der Funktionalität bzw. auch keine übersichtliche Darstellung.

Zum Programmieren derartiger SPS-Steuerungen werden im Stand der Technik SPS-Programmiersysteme verwendet. Die Programmierung von speicherprogrammierbaren Steuerungen wird oftmals mittels Programmiersprachen nach IEC 61131-3 durchgeführt (beispielsweise durch ST: Strukturierter Text; FUP: Funktionsplan; KOP: Kontaktplan usw.). Dabei ist auch im Stand der Technik die SPS-Programmierung sehr flexibel und damit können auch im Wesentlichen beliebige Abläufe gesteuert werden.

Aus dem Stand der Technik bekannte SPS-Programmiersysteme weisen üblicherweise eine Oberfläche auf, mit deren Hilfe SPS-Programme und SPS-Funktionsbausteine (FB) in verschiedenen Sprachen bzw. Sprachdialekten erstellt werden können. Dabei ist es üblich, diese Funktionsbausteine zu instanziieren, was bedeutet, dass jeder FB bei seiner Verwendung wie eine Variable einzeln und eigens deklariert und definiert werden muss.

Wie oben erwähnt, steht zur Diagnose der erstellten Programme bzw. Funktionsbausteine der Debugmodus zur Verfügung, mit dessen Hilfe im Kontext der Programmieroberfläche der Zustand von SPS-Variablen visualisiert werden kann. Dies erfolgt dabei mit Hilfe einer Statusanzeige, die im Aussehen je nach verwendeter Programmiersprache unterschiedlich ist.

Auch ist es dabei üblich, dass sich die SPS-Programme und FBs in einem Deklarationsteil und einem Implementationsteil untergliedern, wobei in dem Deklarationsteil die SPS-Variablen und FB-Instanzen instanziiert werden und im lmplementationsteil die Funktionalität ausprogrammiert wird. Unter dem Begriff Instanziieren wird dabei ein Definieren oder Herstellen der jeweiligen Variablen und der Instanzen verstanden.

Im Rahmen des erwähnten Debugmodus innerhalb des Programmiersystems können Werte von SPS-Variablen gelesen, geändert und geforct werden. Unter einem Forcen versteht man dabei das dauerhafte Setzen einer Variablen auf einen vorlegbaren Wert. Weiterhin ermöglicht die erwähnte Statusanzeige im Kontext eines FBs es auch, FB-interne Werte darzustellen, die außerhalb des FBs nicht abrufbar sind. So können beispielsweise interne Zustände eines FBs dargestellt werden.

Weiterhin ist es bekannt, dass zu weiterführenden Diagnosezwecken sogenannte Watch-Fenster enthalten sind, in denen man sich tabellarisch beliebig ausfüllbare Variablen gruppiert ansehen kann. Dabei ist es auch möglich, die Auswahl dieser darzustellenden Variablen über suchbare (browsebare) Listen zu erleichtern, wobei in diesem Falle die Namen der jeweiligen Variablen nicht genau gekannt und eingegeben werden müssen.

Weiterhin ist es auch dem Stand der Technik bekannt, zu den programmierten Funktionsbausteinen (FBs) im Kontext einer Bedieneroberfläche (HMI) spezielle Diagnosedialoge zu erstellen. Diese Dialoge bieten die Möglichkeit einer Darstellung und Ein- und Ausgabe von SPS-Variablen. Hier ist jedoch kein Forcen von Variablen möglich sondern nur ein Lesen bzw. Schreiben. Auch stehen diese Dialoge im Stand der Technik in keinem automatisch hergestellten Zusammenhang zu dem FB, das heißt es sind losgelöst von diesem FB in einen anderen Kontext eines grafischen Dialogsystems und sind damit auch nicht Bestandteil des Objekts Funktionsbaustein.

Weiterhin ist es bekannt, in dem SPS-Programmiersystem Variablen mit der Eigenschaft "private" vorzusehen. Diese Variablen werden nur in einem SPS-FB intern verwendet und sind von außen nicht sichtbar. Auch in einer Bedieneroberfläche (HMI) sind diese Variablen von FBs nicht darstellbar sondern nur die Daten, die an den Aufrufgrenzen des FBs vorhanden sind, wobei es sich bei diesen Daten um von außen lesbare interne Variablen, Aufrufparameter und Rückgabewerte handelt. Auch werden die Referenzdatentypen, also beispielsweise Pointer-Variablen und sogenannte VAR_IN_OUT-Datentypen der SPS heutzutage von den Programmieroberflächen nicht dargestellt.

Damit bestehen im Stand der Technik die Nachteile, dass es in den bekannten SPS-Programmiersystemen keine Möglichkeit gibt, eine Verbindung von FB-Instanzen zu entsprechenden grafischen Dialogen herzustellen, um funktionelle Zusammenhänge mehrerer SPS-Variablen grafisch unterstützt darzustellen. Möglich sind indes nur textuelle (Status-) Anzeigen von FB-Instanzen und SPS-Variablen im Kontext von SPS-Programmiersystemen.

Weiterhin sind zur Anwendung dieser oben erwähnten Statusanzeigen im SPS-Programmiersystem tief greifende Kenntnisse der Verwendung des jeweiligen Programmiersystems notwendig, beispielsweise über die Verwendung von Forcen-Dialogen und die Anwendung der oben beschriebenen Watch-Fenster.

Auch gibt es in grafisch orientierten Darstellungen keine Möglichkeit des Forcens von SPS-Variablen und weiterhin auch keine Möglichkeit, auf Referenzdatentypen wie Pointer oder VAR_IN_OUTs zuzugreifen. Auch bestehen keine Möglichkeiten auf die erwähnten internen Variablen ("private") zuzugreifen.

Eine Ankopplung des FBs an eine Online-Hilfe ist im Stand der Technik nur auf Basis der Hilfe des FBs selbst möglich, das heißt der Aufruf der Online-Hilfe leitet den Anwender nur zur Hilfe des FBs. Weitergehende direkte Einsprünge zu Beschreibungen von Ein- und Ausgängen von FBs sind nicht vorhanden.

Der vorliegenden Erfindung liegt daher die Aufgabe zugrunde, die Anwenderfreundlichkeit bei der Programmierung und Diagnose von speicherprogrammierbaren Steuerungen zu erhöhen. Weiterhin soll eine verbesserte Möglichkeit geschaffen werden, Parameter und Variablen der Steuerung an den Benutzer anzuzeigen. Auch soll eine Möglichkeit geschaffen werden, dass auch Nutzer, welche nicht über spezielle Kenntnisse in der Programmierung verfügen, eine Diagnose vornehmen können.

Dies wird erfindungsgemäß durch ein Verfahren nach Anspruch 1 erreicht. Vorteilhafte Varianten des Verfahrens sind Gegenstand der Unteransprüche.

Bei einem erfindungsgemäßen Verfahren zum Programmieren und/oder Diagnostizieren einer speicherprogrammierbaren Steuerung mit wenigstens einem speicherprogrammierbaren Funktionsbaustein wird zum Programmieren ein vorgegebenes Programmiersystem verwendet und im Rahmen dieses Programmiersystems werden Variablen vorgegeben und zum Programmieren Informationsaustauschabläufe verwendet. Erfindungsgemäß werden Ergebnisse der Programmierung oder Diagnose während wenigstens eines Programmiermodus über eine Anzeigeeinrichtung ausgegeben und die Informationsaustauschabläufe werden dem Funktionsbaustein zugeordnet und stehen als vordefinierte Informationsaustauschabläufe dieses speicherprogrammierbaren Funktionsbausteins zur Verfügung.

Unter Informationsaustauschabläufen werden insbesondere Dialoge bezeichnet, wobei es sich bei diesen Dialogen sowohl um einzelne Dialoge handeln kann als auch um sogenannte Dialogketten, das heißt eine Zusammenstellung aus mehreren hintereinander abfolgenden Dialogen und auch um eine Dialogstruktur, wie beispielsweise baumstrukturartig aufgebaute Dialoge. Damit beschreibt ein Dialog einen gleichberechtigten Informationsaustausch, der insbesondere in Echtzeit zwischen einem Gerät und einer Person ablaufen kann.

Damit wird erfindungsgemäß vorgeschlagen, insbesondere grafisch oder tabellarisch vordefinierte Dialoge mit entsprechenden Funktionsbausteinen oder Funktionsbausteininstanzen zu verkoppeln. Die Dialoge sind damit Teil des jeweiligen Objektes Funktionsbaustein und sind bereits als Eigenschaft dieses Funktionsbausteins (FB) vorhanden.

Bei einem bevorzugten Verfahren sind die Informationsaustauschabläufe aus einem erstellten Programm für die speicherprogrammierbare Steuerung abrufbar. Genauer gesagt können die Dialoge bevorzugt in dem Kontext des SPS-Programms per Kontextmenü des FBs aufgerufen werden. Dies kann beispielsweise über das Kontextmenü oder einen Doppelklick auf eine bestimmte ST-Programmzeile mit dem FB-Aufruf im Implementationsteil oder auf eine Zeile der Deklaration des Funktionsbausteins im Deklarationsteil erfolgen. Weiterhin kann auch ein Doppelklick auf den FB bzw. die Programmstelle ermöglicht werden.

Bei einem weiteren bevorzugten Verfahren steht ein Verzeichnis einer Vielzahl von speicherprogrammierbaren Funktionsbausteinen zur Verfügung und die Informationsaustauschabläufe sind über dieses Verzeichnis aufrufbar bzw. herunterladbar. Damit werden hier die Dialoge in einer suchbaren Liste von FB-Instanzen aufgerufen, wobei die Dialoge hier nicht im Kontext des SPS-Programms sondern in einer gesonderten Liste enthalten sind, in der alle instanziierten FBs enthalten sind.

Weiterhin wird mittels eines Informationsaustauschablaufs wenigstens eine Variable auf einen vorbestimmten Wert festgelegt. Bei diesem bevorzugten Verfahren ist damit auch die Möglichkeit des oben beschriebenen Forcens im Rahmen von Dialogen gegeben. Auch auf diese Weise wird die Programmierung von speicherprogrammierbaren Steuerungen erheblich vereinfacht.

Bei einem weiteren bevorzugten Verfahren enthält wenigstens ein Informationsaustauschablauf ein Bildelement.-Damit ist es bevorzugt möglich, dass an den Benutzer mit oder im Rahmen des eigentlichen Dialogs ein Bildelement ausgegeben wird, welches beispielsweise eine Teilansicht der zu diagnostizierenden Maschine bzw. der zu diagnostizierenden Funktionalität zeigt. Auf diese Weise kann in besonders vorteilhafter Weise dem Benutzer veranschaulicht werden, wie sich ein bestimmter Eingriff in die Maschine beispielsweise durch Setzen bestimmter Grenzwerte auf den Maschinenablauf auswirkt. Gleichzeitig können neben dem Bildelement Informationen über einen bestimmten von dem Benutzer zu setzenden Wert ausgegeben werden. So kann beispielsweise der Benutzer darüber informiert werden, dass eine Beschleunigungskompensation bei Geschwindigkeitssollwertänderungen einen Drehmomentgrenzwert in Abhängigkeit der Bahnbreite des Materialdichtefaktors und des aktuellen Wickeldurchmessers ändert.

Auf diese Weise wird auch für nicht hoch spezialisierte Benutzer die Diagnose der Maschine bzw. einer Funktionalität erheblich vereinfacht. Damit wird hier vorgeschlagen, neben einer beispielsweise rein tabellarischen Darstellung auch eine logisch strukturierte Darstellung hinzuzufügen. Mit Hilfe der erwähnten grafischen Bildelemente sind Dialoge möglich, die neben der reinen Darstellung der einzustellenden bzw. zu beobachtenden Parameter einen strukturellen Sachverhalt darstellen und damit funktionelle Zusammenhänge grafisch einfacher aufbereiten.

Daneben besteht bei parameterbasierten Systemen die Möglichkeit, eine Vielzahl von Parametern zu Diagnosezwecken tabellarisch anzeigen zu lassen, wobei hierbei eine logische Gruppierung der Informationen möglich ist.

Bei einem weiteren bevorzugten Verfahren werden die Informationsaustauschabläufe über den Implementationsteil oder den Deklarationsteil des SPS-Programms aufgerufen.

Durch die Verkopplung der Dialoge mit den FBs ist es möglich, die Dialoge im Kontext aufzurufen. Dies bedeutet, dass über ein Kontextmenü der entsprechende Dialog mit dem Kontext des FBs aufgerufen werden kann. Dabei ist es, wie ausgeführt, möglich, dass dieser Aufruf über den Implementationsteil des SPS-Programms erfolgt. So ist es beispielsweise möglich, dass mit Hilfe der rechten Maustaste auf eine bestimmte Programmzeile geklickt wird, die den Aufruf des FBs enthält. Dies ist beispielsweise bei textuellen Programmiersprachen möglich, insbesondere bei ST (strukturierter Text) oder AWL (Anweisungsliste). In anderen textuellen Sprachen ist eine-analoge Anwendung möglich.

Weiterhin kann auch beispielsweise per Maustaste oder Doppelklick auf den FB im Programmiersystem geklickt werden. Dies ist für grafisch orientierte Programmiersprachen bevorzugt, wie beispielsweise KOP (Kontaktplan) oder FUP (Funktionsplan) oder AS (Ablaufsprache). Auch in anderen grafisch orientierten Sprachen ist dies analog möglich. Weiter ist es auch möglich, direkt auf eine Schaltfläche des FBs in einer grafisch orientierten Programmiersprache zu klicken.

Daneben kann der Aufruf auch über den Deklarationsteil des SPS-Programms erfolgen, beispielsweise, indem mit der rechten Maustaste oder mit Doppelklick auf eine entsprechende Zeile der Deklaration des FBs geklickt wird.

Daneben können auch spezielle Menüs (z. B. Pulldown-Menüs) geschaffen werden, welche im Kontext des FBs und der Menüzeile des Programmiersystems erscheinen. Dabei wird der Kontext durch die Cursorposition im Deklarations- und/oder Implementationsteil vorgegeben.

Vorteilhaft in dieser Vorgehensweise ist die resultierende Übersichtlichkeit des Codes, d. h. auch beim Debugen kann man direkt an der interessierenden Stelle einen Dialog öffnen. Dies ist insbesondere dann von Vorteil, wenn mehrere Instanzen des selben FBs vorhanden sind. Durch Klicken im SPS-Programm wird gleich die gewünschte FB-Instanz referenziert.

Bei einem weiteren bevorzugten Verfahren sind die Informationsaustauschabläufe als suchbare Liste aller FB-Instanzen abrufbar. Dies bedeutet, dass für jeden instanziierten FB ein Listeneintrag vorhanden ist, der ausgewählt werden kann, wodurch die Dialoge in einer suchbaren Liste von FB-Instanzen aufgerufen werden können. Der Aufruf kann dabei auch hier beispielsweise per Mausklick in einer sogenannten Listbox oder einer baumstrukturartigen Darstellung der FB-Instanzen erfolgen. Dabei kann sich diese Liste in vorteilhafter Weise auf diejenigen FBs beschränken, die auch einen Informationsaustauschablauf beinhalten. Auf diese Weise wird die Übersichtlichkeit bei der Diagnose erhöht. Damit werden auch hier die Informationsaustauschabläufe nicht innerhalb des Programmkontextes aufgerufen, sondern in einer gesonderten Liste mit einem eigenen Benutzermenü.

Bei einem weiteren bevorzugten Verfahren werden mittels wenigstens eines Informationsaustauschablaufs interne Zustände des Funktionsbausteins angezeigt.

Bei einem weiteren bevorzugten Verfahren ist ein Anzeigen von Variablen mit Zugriffsmodifizierer zur Darstellung interner Zustände des FBs und zur Anzeige von Referenzdatentypen möglich. Dabei kann es sich beispielsweise um VAR_IN_OUT oder Pointer handeln.

Bei aus dem Stand der Technik bekannten Lösungen, die auf HMIs beruhen, das heißt auf Diagnosemöglichkeiten im Rahmen von Bedieneroberflächen, können keine internen Zustände der FBs mit Zugriffsmodifizierer "private" und keine Referenzdatentypen dargestellt werden. In diesem Falle müssten alle interessierenden internen Zustände zusätzlich auf FB-Bausteinausgänge gelegt werden. Dies ist jedoch aufwändig und führt zu einer unübersichtlichen Darstellung und reduziert damit die Leistungsfähigkeit des SPS-Programms.

Die Darstellung interner Zustände hilft insbesondere beim Debuggen eines FBs. FBs beinhalten interne Zustände oft in Form einer sog. Zustandsmaschine (state machine), wobei eine Zustandsmaschine dabei Zustände und gewisse Regeln für Zustandsübergänge besitzt (state machine). Durch die Anzeige der internen Zustände wird diese state machine für den Programmierer transparenter und er kann den Programmfluss besser nachverfolgen. Die Darstellbarkeit von Referenzdatentypen hilft, alle interessierenden Daten eines FBs darzustellen. Ansonsten ist man in der Darstellung von FB Daten stark eingeschränkt.

Bei einem weiteren bevorzugten Verfahren sind über einen Informationsaustauschablauf Hilfsanweisungen möglich. Damit kann in den Dialogen beispielsweise eine Ankopplung an eine Online-Hilfe erfolgen. Im Stand der Technik weist ein SPS-Programmiersystem üblicherweise die Möglichkeit auf, ein Hilfesystem aufzurufen. So ist es bekannt, per Klick auf die F1 Taste im Kontext des FBs die gezielte Hilfe für diesen FB aufzurufen. Durch die hier vorgeschlagene dialoggestützte Darstellung kann dies wesentlich differenzierter erfolgen. In dem jeweiligen Informationsaustauschablauf sind beim Aufruf des Hilfesystems fein granularere Einsprünge in die Hilfe möglich. So kann bei einem komplexen FB, der mehrere Hilfeseiten umfasst (z. B. 20 Seiten je nach Kontext im Informationsaustauschablauf über die aktive Cursorposition) die Richtige der Hilfeseiten direkt aufgerufen werden.

Weiterhin werden besonders bevorzugt neben SPS -Variablen noch weitere Datenobjekte in den Informationsaustauschabläufen dargestellt. Dies ist beispielsweise interessant, wenn bei Motion-Control-Systemen neben den SPS -Variablen noch weitere Datenobjekte vorhanden sind. So können beispielsweise bei parameterbasierten Systemen zu der Darstellung der FB spezifischen Daten auch noch weitere systemspezifische Parameter dargestellt werden. Beispiele für derartige weitere Parameter sind eine Darstellung einer Taskzykluszeit in dem Dialog, in deren Kontext der FB läuft. Auf diese Weise können die Echtzeiteigenschaften des FBs visualisiert werden. Auch ist es möglich, einen Systemparameter im Informationsaustauschablauf darzustellen, um auf diese Weise beispielsweise eine Systemzeit mitanzuzeigen.

Weitere Vorteile und Ausführungsformen ergeben sich aus den beigefügten Zeichnungen:

Darin zeigen:
- Fig. 1: Eine Veranschaulichung einer grafischen Darstellung eines Informationsaustauschablaufs;
- Fig. 2: Eine Darstellung zur Veranschaulichung des Forcens von Parametern; und
- Fig. 3: Eine blockdiagrammartige Darstellung für eine Maschine.

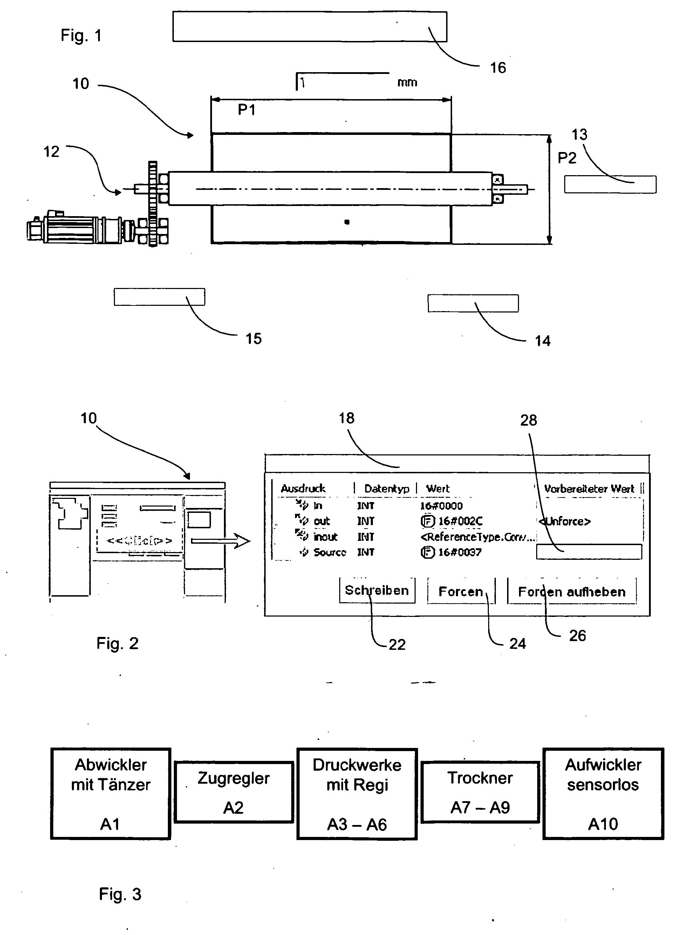

Fig. 1 zeigt eine schematische Darstellung für einen vorteilhaften Informationsaustauschablauf. Innerhalb dieses Informationsaustauschablaufs 10 ist ein Bildelement 12 vorgesehen, welches einen Antrieb für eine Achse veranschaulicht. Weiterhin sind innerhalb dieses Dialogs bzw. Informationsaustauschablaufs Eingabefenster 13, 14, 15 vorgesehen, über welche Eigenschaften des durch das Bildelement 12 veranschaulichten Maschinenteils eingestellt werden können. Durch dieses Bildelement 12 wird eine vorgenommene Änderung veranschaulicht. Das Bildelement 12 kann dabei auch in Abhängigkeit der Daten in den Eingabefeldern in seinem Aussehen dynamisch geändert werden (z.B. mit/ohne Getriebe). Auch werden einzelne Parameter des Systems visualisiert, beispielsweise wird durch den Doppelpfeil P1 die Bahnbreite veranschaulicht und durch den Doppelpfeil P2 einen Rollendurchmesser. In dem linken unteren Eingabefeld 15 kann beispielsweise ein Drehmoment vorgegeben werden und über ein weiteres Informationsfenster 16 kann dem Benutzer eine Information über die jeweiligen vorgenommenen Änderungen ausgegeben werden.

Diese Ein- und Ausgabefenster stellen Dialoge dar, die mit dem FB, der für die Steuerung des in dem Bildelement 12 veranschaulichten Maschinenteils bzw. Funktionalität verantwortlich ist.

Fig. 2 zeigt eine Darstellung, die sich auf das Forcen von Parametern bezieht. Dabei kann wiederum in dem Dialog 10 durch Anklicken eine bestimmte Variable aufgerufen werden und diese in einem weiteren Fenster 18 angezeigt werden. Innerhalb dieses Fensters 18 kann anschließend die Variable auf einen bestimmten Wert festgelegt werden (Bezugszeichen 24) oder auch das Forcen (Bezugszeichen 26) aufgehoben werden oder auch eine Variable neu eingeschrieben (Bezugszeichen 22) werden. Entsprechende Werte können über ein Eingabefenster 28 eingegeben werden.

Fig. 3 zeigt eine schematische Darstellung zur Veranschaulichung einer erfindungsgemäßen Maschine. Diese Maschine weist mehrere Einheiten auf, wie hier einen Abwickler mit Tänzer, einen Zugregler, Druckwerke, einen Trockner und einen Aufwickler. Diese einzelnen Anteile können wiederum mehrere Antriebe aufweisen, die jeweils durch Funktionsbausteine gesteuert sind. Durch die vorliegende Erfindung ist es möglich, die einzelnen Abschnitte dieser Maschine einzeln zu diagnostizieren und insbesondere auch hinsichtlich ihrer Parameter zu beeinflussen.

Durch die erfindungsgemäße Vorgehensweise wird auch eine detailliertere Ankopplung an eine etwaige Online-Hilfe ermöglicht und auch eine Verkopplung von SPS-Daten zu weiteren Motion-System-Daten.

Durch die Verkopplung der Dialoge mit den FBs werden diese ein Teil der objektorientierten FB-Struktur. Genauer besteht das Objekt FB aus dem eigentlichen FBS-Funktionsbaustein und beinhaltet zusätzlich wenigstens einen Dialog. Mit anderen Worten wird der Dialog gleich mit dem Funktionsbaustein mitgeliefert, was bedeutet, dass dieser nicht eigenständig installiert werden muss, sondern vorhanden ist, sobald der Funktionsbaustein installiert ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 10: Informationsaustauschablauf
- 12: Bildelement
- 13, 14, 15,18: Eingabefenster
- 16: Ausgabefenster
- 22: Eingabeelement zum Schreiben einer Variable
- 24: Eingabeelement zum Forcen einer Variable
- 26: Eingabeelement zum Aufheben des Forcens einer Variable
- 28: Eingabefenster
- P1, P2: Doppelpfeile

## Patentansprüche

1. Verfahren zum Programmieren und/oder zur Diagnose einer speicherprogrammierbaren Steuerung mit wenigstens einem speicherprogrammierbaren Funktionsbaustein, wobei zum Programmieren ein vorgegebenes Programmiersystem verwendet wird, im Rahmen dieses Programmiersystems Variabeln vorgegeben werden und zum Programmieren Informationsaustauschabläufe (10) verwendet werden,
**dadurch gekennzeichnet, dass**
Ergebnisse der Programmierung während wenigstens eines Programmiermodus über eine Anzeigeeinrichtung ausgegeben werden, und die Informationsaustauschabläufe (10) dem Funktionsbaustein zugeordnet sind und als vordefinierte Informationsaustauschabläufe (10) dieses speicherprogrammierbaren Funktionsbausteins zur Verfügung stehen.

2. Verfahren nach Anspruch 1,
**dadurch gekennzeichnet, dass**
Informationsaustauschabläufe (10) aus einem erstellten Programm für die speicherprogrammierbare Steuerung abrufbar sind

3. Verfahren nach Anspruch 1,
**dadurch gekennzeichnet, dass**
ein Verzeichnis einer Vielzahl von speicherprogrammierbaren Funktionsbausteinen zur Verfügung steht und die Informationsaustauschabläufe (10) über dieses Verzeichnis herunterladbar sind.

4. Verfahren nach wenigstens einem der vorangegangenen Ansprüche,
**dadurch gekennzeichnet, dass**
mittels eines Informationsaustauschablaufs (10) wenigstens eine Variable auf einen vorbestimmten Wert festgelegt wird.

5. Verfahren nach wenigstens einem der vorangegangenen Ansprüche,
**dadurch gekennzeichnet, dass**
die Informationsaustauschabläufe (10) Bildelemente (12) aufweisen.

6. Verfahren nach wenigstens einem der vorangegangenen Ansprüche,
**dadurch gekennzeichnet, dass**
die Informationsaustauschabläufe (10) über den Implementationsteil oder den Deklarationsteil des SPS-Programms aufgerufen werden.

7. Verfahren nach wenigstens einem der vorangegangenen Ansprüche,
**dadurch gekennzeichnet, dass**
mittels wenigstens eines Informationsaustauschablaufs (10) interne Zustände des Funktionsbausteins angezeigt werden.

8. Verfahren nach wenigstens einem der vorangegangenen Ansprüche,
**dadurch gekennzeichnet, dass**
über einen Informationsaustauschablauf (10) Hilfsanweisungen abrufbar sind.
